# EUROPÄISCHE PATENTSCHRIFT

(11) **EP 1 407 577 B1**
(45) Veröffentlichungstag und Bekanntmachung des Hinweises auf die Patenterteilung: **14.04.2010**
(21) Anmeldenummer: 02716703.0
(22) Anmeldetag: 30.01.2002
(51) Int. Cl.: H04L 12/28

(54) **VERFAHREN ZUR VERIFIZIERUNG VON FERNSPRECHRÜCKRUFINFORMATION FÜR ÜBER DAS INTERNET EINGELEITETE RÜCKRUFE**
METHOD FOR VERIFYING TELEPHONE CALL BACK INFORMATION FOR RETURN CALLS WHICH ARE INITIATED VIA THE INTERNET
PROCEDE DE VERIFICATION D'INFORMATIONS DE RAPPEL TELEPHONIQUE POUR DES RAPPELS DECLENCHES VIA INTERNET

(30) Priorität: 29.06.2001 EP 01102418
(43) Veröffentlichungstag der Anmeldung: 14.04.2004
(73) Patentinhaber: SIEMENS AKTIENGESELLSCHAFT, 80333 München (DE)
(72) Erfinder: UNGER, Stefan, 82008 Unterhaching (DE)
(86) Internationale Anmeldenummer: PCT/EP2002/000972
(87) Internationale Veröffentlichungsnummer: WO 2003/005642

(56) Entgegenhaltungen:
- EP-A- 1 059 798
- WO-A-00/44148
- US-A- 5 901 284

## Beschreibung

Die Erfindung bezieht sich auf ein Verfahren zum Verifizieren von Rückrufinformation, durch die von einem Internet-Endgerät ein PSTN Rückruf durch einen Internet-Dienstanbieter veranlasst wird, wobei die Internet-Verbindung durch einen Zugangs-Server gesteuert wird.

Derzeit sind Internet-Dienste weit verbreitet, bei denen die Möglichkeit besteht, über das Internet einen für den Kunden üblicherweise kostenlosen-Rückruf einzuleiten. Beispiele für diese Internet-Dienste sind Click-to-Dial Anwendungen, über Internet aktivierte Weckrufe oder über Internet aktivierte Konferenzen.

Bei einer Anforderung eines telefonischen Rückrufs muss die Rufnummer des eigenen Anschlusses angegeben werden. Durch Angabe falscher Informationen fehlgesteuerte Rückrufe werden vermittlungs- und übertragungstechnische Ressourcen in den Kommunikationsnetzen und bei dem Dienstanbieter unnötigerweise bzw. missbräuchlicherweise beansprucht, und Endgeräte bzw. deren Benutzer rückgerufen, die keinen Rückruf wünschen. Darüber hinaus können bei Diensten, wo der Kunde die Kosten z.B. im Rahmen eines R-Gesprächs übernimmt, bei fehlgeleiteten Anrufen zusätzliche Kosten auf den Dienstanbieter zukommen. Des weiteren ist auf die juristische Absicherung bzw. die Verlässlichkeit der Rückrufinformation zu achten, um beispielsweise wiederholte nichtgewünschte Rückrufe zu vermeiden.

Eine Vorbeugung gegen einen derartigen Missbrauch besteht darin, die Gefahr durch falsche Angaben durch eine vorhergehende Registrierung oder Subskription der Teilnehmer einzudämmen. Diese Lösung lässt aber keine sofortige Nutzung des Dienstes durch beliebige Internetnutzer zu und würde deshalb Kunden von der Nutzung des Dienstes abhalten. Beispielsweise wären Click-to-dial Dienste, die die umgehende Benutzung durch beliebige Kunden vorsehen, nicht möglich.

Aus der US 5,901,284 A ist ein Telekommunikationssystem sowie ein Verfahren bekannt, bei dem der Zugang Einwahlen über ein Telekommunikationsendgerät nur für authorisierte Nutzer zugelassen wird.

Aus der EP 1 059 798 A2 ist ein Verfahren sowie ein System bekannt bei dem ein Voice-over-IP basierter Chat, also eine anonymisierte Sprachkommunikation, ermöglicht wird, wobei hier auch aus der Telefonie bekannte Leistungsmerkmale, Rückruf, möglich sind.

Der Erfindung liegt die Aufgabe zugrunde, ein einfaches Verfahren zum Schutz gegen Missbrauch von Rückrufdiensten durch Angabe falscher Rückrufinformationen anzugeben, das ohne vorhergehende Registrierung des Kunden beim Dienstanbieter auskommt.

Die Aufgabe wird ausgehend von einem Verfahren zum Verifizieren von Rückrufinformation gemäß den Merkmalen der Oberbegriffe der Patentansprüche 1 und 2 jeweils durch deren kennzeichnende Merkmale gelöst.

Der wesentliche Aspekt des erfindungsgemäßen Verfahrens besteht darin, dass im Server des Dienstanbieters die aktuell zugeordnete IP Adresse des jeweiligen Internet-Endgeräts erfasst und der Zugangs-Server anhand der IP Adresse identifiziert wird. Anschließend wird vom Server des Dienstanbieters eine internetendgerätspezifische Anfrage an den Zugangs-Server übermittelt. Auf die Anfrage hin wird im Zugangs-Server internetendgerätspezifische Information ermittelt und zu dem anfragenden Server übertragen. Schließlich wird mit Hilfe der vom Zugangs-Server übermittelten Information die Rückrufinformation verifiziert und in Abhängigkeit des Verifizierungsergebnisses ein Rückruf eingeleitet oder verhindert - Anspruch 1.

Das beschriebene Verfahren erlaubt ohne vorhergehende Registrierung des Internet-Endgeräts bzw. dessen Benutzer die angegebene Rückrufinformation zu verifizieren. Eventuelle Störer werden frühzeitig identifiziert und Störanrufe bereits im Server verhindert. Das Verfahren kann deshalb auch bei Click-to-dial Diensten eingesetzt werden, die die umgehende Benutzung durch beliebige Kunden vorsehen.

Der wesentliche Aspekt des weiteren erfindungsgemäßen Verfahrens besteht darin, dass im Server des Dienstanbieters die aktuell zugeordnete IP Adresse des jeweiligen Internet-Endgeräts erfasst und vom Server des Dienstanbieters an das Kommunikationssystem weitergegeben wird. Dort wird anhand der IP Adresse der Zugangs-Server identifiziert. Anschließend wird vom Kommunikationssystem des Dienstanbieters eine internetendgerätspezifische Anfrage an den Zugangs-Server übermittelt. Auf diese Anfrage hin wird im Zugangs-Server internetendgerätspezifische Information ermittelt und zu dem anfragenden Kommunikationssystem übertragen. Schließlich wird mit Hilfe der vom Zugangs-Server übermittelten Information die Rückrufinformation verifiziert und in Abhängigkeit des Verifizierungsergebnisses ein Rückruf eingeleitet oder verhindert - Anspruch 2. Ein zusätzlicher Vorteil des weiteren erfindungsgemäßen Verfahrens besteht darin, dass der Server des Dienstanbieters sowohl dynamisch als auch hinsichtlich des Speicherbedarfs entlastet wird.

Eine Weiterbildung wird des erfindungsgemäßen Verfahrens ist darin zu sehen, dass die Rückrufinformation bei einem negativen Verifizierungsergebnisses in eine Liste von inkorrekten Informationen eingetragen wird. Die Liste wird dazu benützt, die von Internet-Endgeräten eingegebene Rückrufinformation mit den in der Liste gespeicherten, inkorrekten Informationen zu vergleichen und bei Gleichheit der eingegebenen Rückrufinformation mit einer in der Liste gespeicherten, inkorrekten Information den Rückruf zu verhindern
- Anspruch 3. Diese Liste stellt eine Negativ-Liste potentieller Störer dar. Das Anlegen einer derartigen Liste hat den Vorteil, dass potentielle Störer ohne eine weitere Anfrage an den Zugangs-Server direkt mithilfe dieser Liste identifiziert werden können. Dieses Vorgehen ist effizienter und erfordert weniger Speicherplatz als das Speichern aller eruierten endgerätspezifischen Informationen.

Andere vorteilhafte Weiterbildungen der Erfindung sind den weiteren Unteransprüchen zu entnehmen.

Im folgenden wird das erfindungsgemäße Verfahren anhand von Figuren als Ausführungsbeispiel näher erläutert. Dabei zeigen
- Fig 1: eine Realisierung gemäß des ersten unabhängigen Anspruchs und
- Fig 2: eine Variante des Verfahrens gemäß des zweiten unabhängigen Anspruchs.

Dabei bezeichnen gleiche Bezeichnungen gleiche Elemente.

Die Figuren zeigen schematisch die Anordnung der wesentlichen Elemente, die bei der Realisierung eines Click-to-Dial (CtD) Dienstes - im weiteren als CtD-Dienst bezeichnet - erforderlich sind.

Für den Zugang zum Internet INT stellt der Internet-Dienstanbieter ein Internet Service Provider Netz ISPN mit einem AAA (Authentification, Authorisation, Accounting) Zugangs-Server ZS und einer über das LDAP (Lightweight directory access protocol) Protokoll ansteuerbaren Datenbank DB(LDAP) zur Verfügung. Ein Internet-Endgerät PC(TLN), beispielsweise ein Personal Computer, kann über das Internet Service Provider Netz ISPN mit dem Internet INT verbunden werden. Voraussetzung für die Benutzung des Zugangs-Servers ZS ist die vorausgehende Registrierung des Internet-Endgeräts PC(TLN). Üblicherweise wird im Zugangs-Server ZS eine Namensinformation ni, eine Rufnummerninformation rni, die z.B. aus einer Telefonnummer bzw. Calling Line Identity (CLI) oder einer ISDN-Adresse bestehen kann, und eine Adressinformation registriert. Ein Dienstanbieter eines CtD-Dienstes stellt einen Server SER(DA) zur Verfügung, der mit dem Internet INT verbunden ist. Der Server des Dienstanbieters SER(DA) ist zudem mit einem Fernsprechnetz PSTN, das in der Fachwelt auch als PSTN (public switched telephone network) bezeichnet wird, verbunden. Über ein Kommunikationssystem KS, z.B. eine Vermittlungsstelle oder eine Nebenstellenanlage, kann von einer vom Dienstanbieter dafür vorgesehenen Anlage TER(CC), z.B. Call Center, Ansageeinrichtung, an das Endgerät TER(TLN) eines Kunden bzw. Teilnehmer ein Anruf vermittelt werden. Bei dem teilnehmerseitigen Endgerät TER(TLN) kann es sich um ein Telefon oder ein Faxgerät handeln.

Bei einem CtD-Dienst wird von einem Internet-Endgerät PC(TLN) aus über das Internet INT ein üblicherweise für den Teilnehmer TLN kostenloser PSTN Rückruf über das Fernsprechnetz PSTN veranlasst. Bei einer Inanspruchnahme eines CtD-Dienstes wird das Internet-Endgerät PC(TLN) über den Zugangs-Server ZS mit dem Internet INT verbunden. Über das Internet INT wird von dem Internet-Endgerät PC(TLN) bei dem Server des Dienstanbieters SER(DA) eine Rückrufinformation rri abgesetzt, wodurch ein Rückruf angefordert wird. Diese Rückrufinformation rri enthält zumindest eine Rufnummerninformation ri und optional eine Namensinformation ni. Die Rufnummerninformation ri stellt meist eine Telefonnummer oder eine Faxnummer dar. Die an den Server des Dienstanbieters SER(DA) übermittelte Rückrufinformation rri wird in diesem erfasst und an das Kommunikationssystem KS weitergeleitet. Von dort aus wird ein Rückruf des kundenseitigen Endgeräts TER(TLN) durch die dafür vorgesehene Anlage TER(CC) eingeleitet.

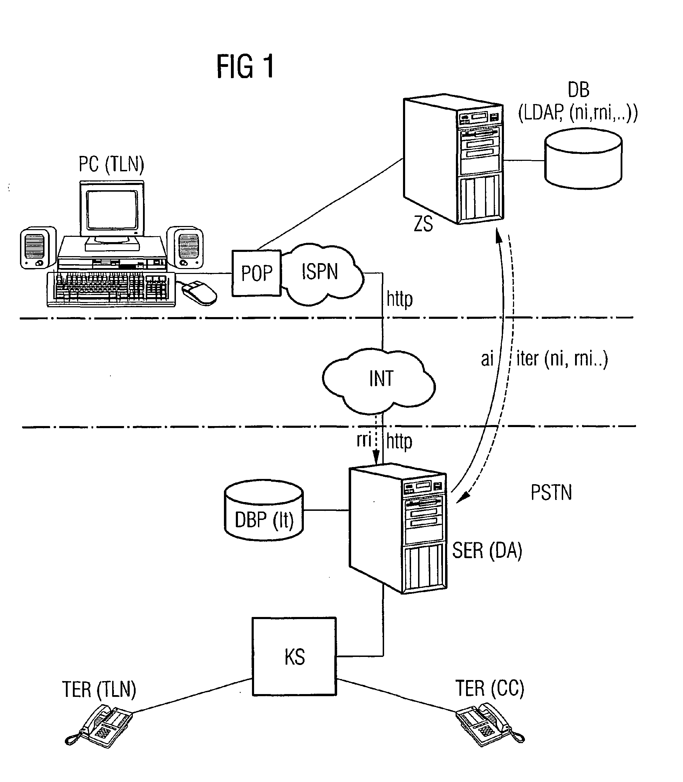

Bei dem erfindungsgemäßen Verfahren wird aus der vom Internet-Endgerät PC(TLN) übermittelten Rückrufinformation rri im Server des Dienstanbieters SER(DA) die zugehörige, aktuell gültige IP Adresse extrahiert. Diese kann bei einer Nachricht im HTTP Format aus dem TCP/IP Kopf (Header) der Nachricht gelesen werden. Aus einem vorgegebenen Teil der IP Adresse wird der vom Internet-Endgerät PC(TLN) benutzte Zugangs-Server ZS identifiziert. Vom Server des Dienstanbieters SER(DA) wird gemäß dem Internet-Protokoll eine internetendgerätspezifische Anfrageinformation ai an den Zugangs-Server ZS übermittelt und so eine Anfrage nach einer internetendgerätspezifischen Information iter(ni, rni,..) gestellt (Figur 1). Im Anwendungsbeispiel ist die internetendgerätspezifische Information iter(ni,rni,..), wie z.B. Namensinformation ni, Rufnummerninformation rni, Adressinformation, usw., in der mit dem Zugangs-Server ZS verbundenen LDAP Datenbank DB(LDAP,(ni,rni,..)) gespeichert. Die Anfrage vom Server des Dienstanbieters SER(DA) richtet sich nach relevanten internetendgerätspezifischen Informationen iter(ni,rni,..), z.B. Namensinformation ni und Rufnummerninformation rni, die zur Registrierung des Internet-Endgeräts PC(TLN) spezifiziert wurden. Die angefragten internetendgerätspezifischen Informationen iter(ni,rni,..) werden über das Internet INT an den Server des Dienstanbieters SER(DA) gesandt, wo ein internetendgerätspezifischer Datensatz It, der in der Fachwelt auch als logging ticket bezeichnet wird, angelegt und ebenfalls in einer LDAP Datenbank DBP(lt) abgelegt wird. Dieser Datensatz It kann z.B. die zur Vermittlung des Rückrufs benötigten Rufnummerninformationen rni, eine Namensinformation ni, eine Adressinformation und die zur Identifizierung des Zugangs-Servers verwendete IP Adresse enthalten. Hierbei ist vorausgesetzt, dass vorab eine Berechtigung vereinbart wurde, die den Zugriff auf die angefragten Informationen erlaubt. Falls keine Rufnummerninformation rni bei der Registrierung erfasst wurde, kann auch im Server des Dienstanbieters SER(DA) mittels eines elektronisch gespeicherten Namen/Rufnummernverzeichnisses die zur Namensinformation ni zugehörige Rufnummerninformation rni ermittelt werden. Die über Internet abgegebene Rückrufinformation rri wird mit dem internetendgerätspezifischer Datensatz It verglichen und auf ihre Übereinstimmung überprüft. Abhängig vom Ergebnis der Verifikation der Rückrufinformation rri übermittelt der Server des Dienstanbieters SER(DA) dann eine Rückrufnachricht rrn an das Kommunikationssystem KS ab, wodurch der Rückruf eingeleitet wird, oder unterlässt das Übermitteln einer Rückrufnachricht rrn, wodurch die Einleitung des Rückrufs verhindert wird.

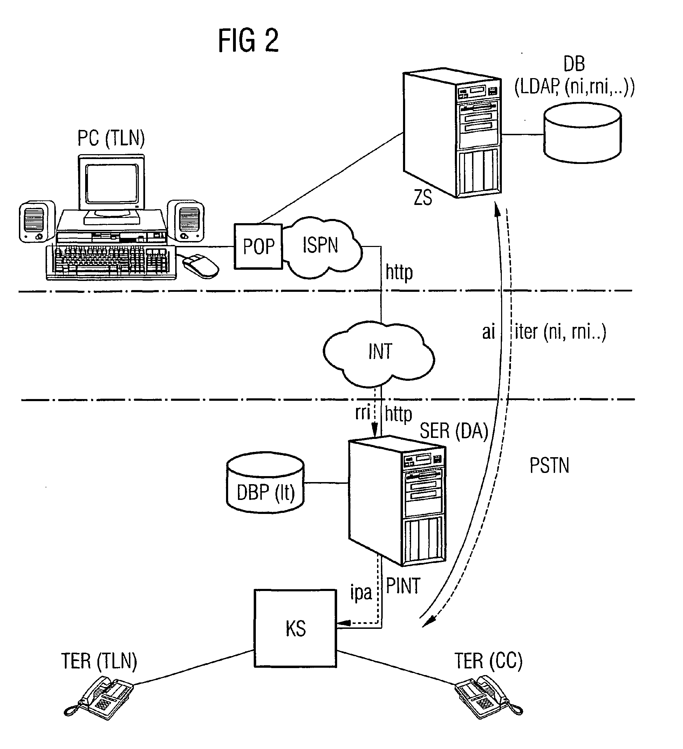

Alternativ zu dieser Realisierung kann die Anfrage nach internetendgerätspezifischer Information iter(ni,rni,..) auch vom Kommunikationssystem KS des Dienstanbieters aus erfolgen (Figur 2). Dabei wird die dem Internet-Endgerät PC(TLN) zugeordnete IP Adresse ipa auch vom Server des Dienstanbieters SER(DA) aus dem TCP/IP Kopf (Header) der zur Angabe der Rückrufinformation rri abgesetzten Nachricht ermittelt. Die IP Adresse wird dann an das vermittlungstechnischen Funktionen für den Aufbau und die Durchführung von PSTN Rückrufen bereitstellende Kommunikationssystem KS weitergegeben. Für die Weitergabe der IP Adresse ist evtl. eine Erweiterung des die Datenübertragung zwischen dem Server des Dienstanbieters SER(DA) und dem Kommunikationssystem KS steuernden Kommunikationsprotokolls erforderlich. Beispielsweise kann das PSTN/Internet Interworking Protokoll verwendet werden - in Figur 2 durch die Bezeichnung PINT angedeutet. Das Verfahren wird dann analog zum ersten Ausführungsbeispiel fortgesetzt, mit dem Unterschied, dass das Kommunikationssystem KS die Funktionen des Servers des Dienstanbieters SER(DA) bei der Anfrage nach der internetendgerätspezifischen Information i-ter(ni,rni,..), der Ermittlung dieser Information und der Verifikation der Rückrufinformation rri übernimmt. Abhängig von dem Verifikationsergebnis wird vom Kommunikationssystem KS einen Rückruf durch die dafür vorgesehene Anlage TER(CC) eingeleitet oder verhindert.

Das erfindungsgemäße Verfahren ist nicht auf die Ausführungsbeispiele beschränkt, sondern kann auch in anderen Netzkonfigurationen, beispielsweise mit ISPN-Netzen und Datennetzen verwendet werden, bei denen ein Rückruf über das Internet eingeleitet wird. Die Verifizierung der Rückrufinformationen kann auch in anderen Netzkomponenten der Kommunikationsnetze PSTN, ISDN, etc. durchgeführt werden.

## Patentansprüche

1. Verfahren zum Verifizieren von Rückrufinformation (rri), durch die von einem Internet-Endgerät (PC(TLN)) ein PSTN Rückruf durch einen Internet-Dienstanbieter veranlasst wird, wobei die Internet-Verbindung durch einen Zugangs-Server (ZS) gesteuert wird,
**dadurch gekennzeichnet,**
- **dass** im Server des Dienstanbieters (SER(DA)) die aktuell zugeordnete IP Adresse (ipa) des jeweiligen Internet-Endgeräts (PC(TLN)) erfasst und der Zugangs-Server (ZS) anhand der IP Adresse identifiziert wird,
- **dass** vom Server des Dienstanbieters (SER(DA)) eine internetendgerätspezifische Anfrage (ai) an den Zugangs-Server (ZS) übermittelt wird,
- **dass** im Zugangs-Server (ZS) eine internetendgerätspezifische Information (iter(ni,rni,..)) ermittelt und zu dem anfragenden Server des Dienstanbieters (SER(DA)) übertragen wird,
- **dass** mit Hilfe der vom Zugangs-Server (ZS) übermittelten Information die Rückrufinformation (rri) verifiziert wird, und
- **dass** in Abhängigkeit des Verifizierungsergebnisses ein Rückruf eingeleitet oder verhindert wird.

2. Verfahren zum Verifizieren von Rückrufinformation (rri), durch die von einem Internet-Endgerät (PC(TLN)) ein PSTN Rückruf bei einem Internet-Dienstanbieter veranlasst wird, wobei die Internet-Verbindung durch einen Zugangs-Server (ZS) gesteuert wird, der mit einem die vermittlungstechnischen Funktionen für den Aufbau und die Durchführung von PSTN Rückrufen bereitstellenden Kommunikationssystem (KS) verbunden ist,
**dadurch gekennzeichnet,**
- **dass** im Server des Dienstanbieters (SER(DA)) die aktuell zugeordnete IP Adresse (ipa) des jeweiligen Internet-Endgeräts (PC(TLN)) erfasst wird,
- **dass** der Server des Dienstanbieters (SER(DA)) die IP Adresse
(ipa) an das Kommunikationssystem (KS) weitergibt, wo anhand
der IP Adresse (ipa) der Zugangs-Server ZS identifiziert wird,
- **dass** vom Kommunikationssystem (KS) des Dienstanbieters eine internetendgerätspezifische Anfrage (ai) an den Zugangs-Server (ZS) übermittelt wird,
- **dass** im Zugangs-Server (ZS) internetendgerätspezifische Information (iter(ni,rni,..)) ermittelt und zu dem anfragenden Kommunikationssystem (KS) übertragen wird,
- **dass** mit Hilfe der vom Zugangs-Server (ZS) übermittelten Information die Rückrufinformation (rri) verifiziert wird, und
- **dass** in Abhängigkeit des Verifizierungsergebnisses ein Rückruf eingeleitet oder verhindert wird.

3. Verfahren nach Anspruch 1 oder 2,
**dadurch gekennzeichnet,**
- **dass** die Rückrufinformation (rri) bei einem negativen Verifizierungsergebnisses in eine Liste von inkorrekten Informationen eingetragen wird,
- **dass** die von Internet-Endgeräten (PC(TLN)) eingegebene Rückrufinformation (rri) mit den in der Liste gespeicherten, inkorrekten Informationen verglichen wird, und
- **dass** bei Übereinstimmung der eingegebenen Rückrufinformation (rri) mit einer in der Liste gespeicherten, inkorrekten Information der Rückruf verhindert wird.

4. Verfahren nach einem der vorhergehenden Ansprüche 1 bis 3,
**dadurch gekennzeichnet,**
- **dass** die internetendgerätspezifische Information (iter(ni,rni,..))
durch eine Rufnummerninformation (ri) und/oder eine Namensinformation (ni) repräsentiert ist,
- **dass** die Rückrufinformation (rri) durch eine Rufnummerninformation (rni) und optional durch eine Namensinformation (ni) gebildet ist, und
- **dass** die Rufnummerninformation (rni) aus einer Telefonnummer
oder einer Faxnummer besteht.

5. Verfahren nach Anspruch 4,
**dadurch gekennzeichnet,**
- **dass** zumindest ein Teil der internetendgerätspezifischen Information (iter(ni,rni,..)) mit der eingegebenen Rückrufinformation (rri) verglichen wird, und
- **dass** bei Übereinstimmung der Rufnummerninformation (rni) ein
Rückruf mithilfe der Telefonnummer oder der Faxnummer über das PSTN eingeleitet und bei Nichtübereinstimmung der Rückruf
verhindert wird.

6. Verfahren nach Anspruch 4,
**dadurch gekennzeichnet,**
- **dass** die im Zugangs-Server (ZS) ermittelte internetendgerätspezifische Information (iter(ni,rni,..)) eine Namensinformation (ni), jedoch keine Rufnummerninformation (rni) enthält, und
- **dass** die Rufnummerninformation (rni) mithilfe eines elektronisch gespeicherten Namens/Rufnummernverzeichnisses ermittelt wird.

7. Verfahren nach Anspruch 2,
**dadurch gekennzeichnet,**
**dass** das die Datenübertragung zwischen dem Server des Dienstanbieters SER(DA) und dem Kommunikationssystem (KS) steuernde Kommunikationsprotokoll für die internetendgerätspezifische Anfrage (ai) erweitert wird.

8. Verfahren nach einem der vorhergehenden Ansprüche,
**dadurch gekennzeichnet,**
- **dass** die beim Zugangs-Server (ZS) zur Registrierung des .Internet-Endgeräts PC(TLN) abgegebene internetendgerätspezifische Informationen (iter(ni,rni,..)) auf einem zusätzlichen Server DB(LDAP,(ni,rni,..)) gespeichert ist, die mittels eines LDAP Protokolls gelesen wird, und
- **dass** vom Server des Dienstanbieters SER(DA) oder vom Kommunikationssystem (KS) mithilfe des LDAP Protokolls direkt auf diesen zusätzlichen Server DB(LDAP,(ni,rni,..)) zugegriffen wird und die internetendgerätspezifische Information (iter(ni,rni,..)) angefragt und übertragen wird.

## Claims

1. Method for verification of callback information (rri), by means of which a PSTN return call by an Internet service provider is initiated by an Internet terminal (PC(TLN)), with the Internet connection being controlled by an access server (ZS),
**characterized**
- **in that** the currently associated IP address (ipa) of the respective Internet terminal (PC(TLN)) is recorded in the server of the service provider (SER(DA)), and the access server (ZS) is identified on the basis of the IP address,
- **in that** the server of the service provider (SER(DA)) transmits an Internet-terminal-specific request (ai) to the access server (ZS),
- **in that** Internet-terminal-specific information (iter(ni,rni,..)) is determined in the access server (ZS) and is transmitted to the requesting server of the service provider (SER(DA)),
- **in that** the information transmitted by the access server (ZS) is used to verify the callback information (rri), and
- **in that** a return call is initiated or is prevented as a function of the verification result.

2. Method for verification of callback information (rri), by means of which a PSTN return call by an Internet service provider is initiated by an Internet terminal (PC(TLN)), with the Internet connection being controlled by an access server (ZS), which is connected to a communications system (KS), which provides the switching functions for setting up and making PSTN return calls,
**characterized**
- **in that** the currently associated IP address (ipa) of the respective Internet terminal (PC(TLN)) is recorded in the server of the service provider (SER(DA)),
- **in that** the server of the service provider (SER(DA)) passes the IP address (ipa) to the communications system (KS), where the access server (ZS) is identified on the basis of the IP address (ipa),
- **in that** the communications system (KS) of the service provider transmits an Internet-terminal-specific request (ai) to the access server (ZS),
- **in that** Internet-terminal-specific information (iter(ni,rni,..)) is determined in the access server (ZS) and is transmitted to the requesting communications system (KS),
- **in that** the information transmitted by the access server (ZS) is used to verify the callback information (rri), and
- **in that** a return call is initiated or is prevented as a function of the verification result.

3. Method according to Claim 1 or 2,
**characterized**
- **in that** the callback information (rri) is entered in a list of incorrect information items if the verification result is negative,
- **in that** the callback information (rri) entered by Internet terminals (PC(TLN)) is compared with the incorrect information stored in the list, and
- **in that**, if the entered callback information (rri) matches incorrect information stored in the list, the return call is prevented.

4. Method according to one of the preceding Claims 1 to 3,
**characterized**
- **in that** the Internet-terminal-specific information (iter(ni,rni,..)) is represented by call number information (ri) and/or by name information (ni),
- **in that** the callback information (rri) is formed by call number information (rni) and, optionally, by name information (ni), and
- **in that** the call number information (rni) comprises a telephone number or a fax number.

5. Method according to Claim 4,
**characterized**
- **in that** at least some of the Internet-terminal-specific information (iter(ni,rni,..)) is compared with the entered callback information (rri), and
- **in that**, if the call number information (rni) matches, a return call is initiated with the aid of the telephone number or of the fax number via the PSTN and, if it does not match, the return call is prevented.

6. Method according to Claim 4,
**characterized**
- **in that** the Internet-terminal-specific information (iter(ni,rni,..)) determined in the access server (ZS) contains name information (ni) but no call number information (rni), and
- **in that** the call number information (rni) is determined with the aid of an electronically stored name/call number directory.

7. Method according to Claim 2,
**characterized**
**in that**
the communication protocol which controls the data transmission between the server of the service provider SER(DA) and the communications system (KS) is extended for the Internet-terminal-specific request (ai).

8. Method according to one of the preceding claims,
**characterized**
- **in that** the Internet-terminal-specific information (iter(ni,rni,..)) which is emitted by the access server (ZS) for registration of the Internet terminal PC(TLN) is stored in an additional server DB(LDAP, (ni,rni,..)) and is read by means of an LDAP protocol, and
- **in that** this additional server DB(LDAP, (ni,rni,..)) is accessed directly with the aid of the LDAP protocol by the server of the service provider SER(DA) or by the communications system (KS), and the Internet-terminal-specific information (iter(ni,rni,..)) is requested and transmitted.

## Revendications

1. Procédé de vérification d'une information de rappel (rri) par laquelle un terminal internet (PC(TLN)) provoque un rappel PSTN par un fournisseur de services internet, la liaison internet étant commandée par un serveur d'accès (ZS), **caractérisé en ce que**
- l'adresse IP (ipa) du terminal internet respectif (PC(TLN)) actuellement attribuée est saisie dans le serveur du fournisseur de services (SER(DA)) et le serveur d'accès (ZS) est identifié à l'aide de l'adresse IP,
- une requête (ai) spécifique au terminal internet est transmise au serveur d'accès (ZS) par le serveur du fournisseur de services (SER(DA)),
- dans le serveur d'accès (ZS), une information (iter (ni, rni, ...)) spécifique au terminal internet est déterminée et est transmise au serveur requérant du fournisseur de services (SER(DA)),
- l'information de rappel (rri) est vérifiée à l'aide de l'information transmise par le serveur d'accès (ZS) et
- un rappel est initialisé ou empêché en fonction du résultat de la vérification.

2. Procédé de vérification d'une information de rappel (rri) par laquelle un terminal internet (PC(TLN)) provoque un rappel PSTN auprès d'un fournisseur de services internet, la liaison internet étant commandée par un serveur d'accès (ZS) qui est relié à un système de communication (KS) fournissant les fonctions techniques de commutation pour l'établissement et la réalisation de rappels PSTN, **caractérisé en ce que**
- l'adresse IP (ipa) du terminal internet respectif (PC(TLN)) actuellement attribuée est saisie dans le serveur du fournisseur de services (SER(DA)),
- le serveur du fournisseur de services (SER(DA)) communique l'adresse IP (ipa) au système de communication (KS) où le serveur d'accès (ZS) est identifié à l'aide de l'adresse IP (ipa),
- une requête (ai) spécifique au terminal internet est transmise au serveur d'accès (ZS) par le système de communication (KS) du fournisseur de services,
- une information (iter(ni, rni, ...)) spécifique au terminal internet est déterminée dans le serveur d'accès (ZS) et est transmise au système de communication (KS) requérant,
- l'information de rappel (rri) est vérifiée à l'aide de l'information transmise par le serveur d'accès (ZS) et
- un rappel est initialisé ou empêché en fonction du résultat de la vérification.

3. Procédé selon la revendication 1 ou 2, **caractérisé en ce que**
- l'information de rappel (rri) est inscrite sur une liste d'informations incorrectes en cas de résultat négatif de la vérification,
- l'information de rappel (rri) saisie par des terminaux internet (PC(TLN)) est comparée avec les informations incorrectes stockées dans la liste et
- le rappel est empêché si l'information de rappel (rri) saisie correspond à une information incorrecte stockée dans la liste.

4. Procédé selon l'une des revendications précédentes 1 à 3, **caractérisé en ce que**
- l'information spécifique au terminal internet (iter(ni, rni, ...)) est représentée par une information portant sur un numéro d'appel (ri) et/ou une information portant sur un nom (ni),
- l'information de rappel (rri) est constituée par une information portant sur un numéro d'appel (rni) et, en option, par une information portant sur un nom (ni) et
- l'information portant sur un numéro d'appel (rni) se compose d'un numéro de téléphone ou d'un numéro de télécopieur.

5. Procédé selon la revendication 4, **caractérisé en ce que**
- au moins une partie de l'information spécifique au terminal internet (iter(ni, rni, ...)) est comparée avec l'information de rappel (rri) saisie et
- en cas de correspondance avec l'information portant sur un numéro d'appel (rni), un rappel est initialisé à l'aide du numéro de téléphone ou du numéro de télécopieur via le PSTN, et le rappel est empêché en cas de non-correspondance.

6. Procédé selon la revendication 4, **caractérisé en ce que**
- l'information spécifique au terminal internet (iter(ni, rni, ...)) déterminée dans le serveur d'accès (ZS) contient une information portant sur un nom (ni), mais pas d'information portant sur un numéro d'appel (rni) et
- l'information portant sur un numéro d'appel (rni) est déterminée à l'aide d'un répertoire de noms et de numéros d'appel stocké électroniquement.

7. Procédé selon la revendication 2, **caractérisé en ce que** le protocole de communication qui commande la transmission de données entre le serveur du fournisseur de services SER(DA) et le système de communication (KS) subit un élargissement pour la requête (ai) spécifique au terminal internet.

8. Procédé selon l'une des revendications précédentes,
**caractérisé en ce que**
- l'information (iter(ni, rni, ...)) spécifique au terminal internet qui a été délivrée au serveur d'accès (ZS) pour l'enregistrement du terminal internet PC(TLN) est stockée sur un serveur additionnel DB(LDAP,(ni, rni, ...)) qui est lu au moyen d'un protocole LDAP et
- le serveur du fournisseur de services SER(DA) ou le système de communication (KS) accède directement audit serveur additionnel DB(LDAP, (ni, rni, ...) ) à l'aide du protocole LDAP et l'information spécifique au terminal internet (iter(ni, rni, ...)) est demandée et transmise.
